# EUROPEAN PATENT APPLICATION

(11) **EP 1 597 960 A1**
(43) Date of publication of application: **23.11.2005**
(21) Application number: 04705825.0
(22) Date of filing: 28.01.2004
(51) Int. Cl.: A01D 46/00

(54) **INTEGRATED VERSATILE EQUIPMENT FOR HARVESTING AND TREATIMENT OF FRUIT ON TREES**

(30) Priority: 07.02.2003 ES 200300304
(71) Applicant: Canela Segura, José, 25001 Lleida (ES)
(72) Inventor: Canela Segura, José, 25001 Lleida (ES)
(74) Representative: Sajda, Wolf E.
(86) International application number: PCT/ES2004/000033
(87) International publication number: WO 2004/068933

(57) **Abstract**

It includes a mobile enclosure surrounding a fruit tree pertaining to a row of trees and made up of a numbe4r of screens forming the sides of the enclosure; a number of covering elements, two pulling vehicles carrying the pressure air generators; air jet projecting devices for knocking down and directing the knocked down fruit; receiving and transporting devices of the fruit as regards their delivery to the loading trailers.

Applicable to the mechanized and rational harvesting of ripe fruit and, where applicable, to the treatment with phyto-sanitary products.

## Description

### FIELD OF THE INVENTION

This invention refers to integrated versatile equipment for harvesting and treatment of fruit on trees.

The mention of "versatile" in the title responds to the possibility of the equipment to be described of being able to become adapted to various functions, such as preventive and curative treatment of fruit tree sicknesses, the treatment of the fruit during its growth and ripening and the harvesting (knocking down) of the fruit on trees when suitably ripe.

The mention of "integrated" corresponds to the shape of the new equipment, which includes all the elements required for the function for which it is intended.

### HISTORY

One has knowledge of equipment designed to carry out various treatment on fruit trees and their harvesting. Amongst the proposals of installations and specific harvesting equipment with this objective, the Spanish Utility models, numbers U200002889 and U200002278, should be mentioned, both in the name of Tenias, S.A., that include fixed sloping panels and a vibrator for knocking down the fruit.

To date the existing equipment, provided with vibrators to knock the fruit down, has had the inconvenience arising from its limited adaptation as regards rational harvesting during ripening according to varieties resulting from the use of the devices used during the functions to be carried out on fruit trees and the early falling of the fruit due to the slowness of the work with loss of performance, in the case of olives, due to unripe fruit.

In other cases there is a functional inconvenience for harvesting certain types of fruit and the treatment of certain tress or fruit that require lengthy preparation and limit the possibilities of using the equipment. Mention should also be made of the ill-treatment to which the fruit when knocked down, falling and harvested is submitted with nets or covers, with damage to the bark of young trunks and also the vegetation due to breaking young production stalks, during operation of the devices comprising the equipment on trees and vegetation (due to knocking down).

### DESCRIPTION OF THE INVENTION

The integrated and versatile equipment purpose of this patent consists of a set of functional devices defining a mobile installation intended to continuously move along all types of terrain with a row of fruit trees. It has means to spray certain phyto-sanitary products on the trees and/or bushes and their fruit and on extensive low cultivation. It also has means for knocking the fruit down, harvesting the fruit knocked down and for transporting the fruit to loading trailers outside the installation.

The new equipment essentially defines an enclosed area with adjustable sizes and shape, suitable for those of the various fruit trees and/or bushes. Its shape and size is adjustable thanks to the versatility of the structure before starting the functional operations carried out by and on the implied devices, with all being capable of adjustment during the operation.

The new equipment operates continuously on a group of fruit trees and/or bushes and functions due to periodic passages according to the characteristics of the operations to be performed, the varieties of fruit and their optimum ripening cycles, as well as the treatment with phyto-sanitary products.

The equipment in question can be used on all types of terrain, such as regular plantations of trees and/or trees of all ages and sizes (from the first fruit) and, optionally, from tree to tree in plantations and uneven terrain. The machinery does not touch the pieces of fruit or vegetation (except for some movable parts that adjust to the stalks of the plants, even those with two or more stalks or trunks such as olive trees).

The treated and harvested fruit may be of the dry type (almond, hazelnut, etc.) and the fresh type (sweet fruits, citrus fruits, olives, etc.) mainly for industrial production.

The environment is respected with the use of the new equipment as the phyto-sanitary products used, in each case, for spraying the fruit are kept inside the area defined by the installation at all times, without leaking to the outside. Furthermore, the use of the treatment products is rationalized and consumed only in strictly necessary amounts. The amounts left over are recovered by recycling, resulting in a great savings as regards treatment costs in product and time.

Collection of the knocked-down fruit is made by means of trays adapted to the drip irrigation area (falling) and up to the feet of the trees, which may be of any height above 20-25 cm. Movable parts are used, sized for trees of 1, 2 or more feet or trunks and helped by lateral screens formed by suitable mesh nets or by waterproof roll-up cloth parts, according to the type of work (harvesting or treatment) to be carried out.

The described equipment constitutes a system for performing the functions of knocking down fruit and phyto-sanitary treatment of trees, based mainly on mechanical, pneumatic, hydraulic, electric and/or electronic devices, with inter-controlled elements and contacts for operating and/or regulating said devices on the way.

The set is mounted on a chassis or self-propelled or towed vehicle, with wheels or chains and with leveling and supporting means according to the characteristics of the terrain. Two such chassis will be used, one of each side of the trees, operating in parallel on one and the other side, with the option of the two chassis with their telescopic portals and supports, assembled and adjusted in width and height by pneumatic and hydraulic cylinders.

In order to facilitate the continuous work in olive plantations of 2, 3 or 4 feet, a bracket set is defined tat moves along rails between trees, adaptable overall to the shapes and positions of the feet of said trees.

In order to facilitate the explanation, this description includes sketches in which a performance case of integrated versatile equipment for harvesting and treatment of fruit on trees is represented for illustrative and non-limiting purposes, according to the principles of the claims.

### BRIEF DESCRIPTION OF THE DRAWINGS

Figure 1 is a diagram of the general structure of the described integrated and versatile equipment, running in parallel along a row of fruit trees during the harvesting-knocking down or treatment phase.
Figure 2 is a profile view of the telescopic cover of the functional enclosure constituting the equipment, one of screens that form the side walls, trays for collecting the fruit when it falls and the chassis or transporting vehicles of the equipment along a row of trees.
Figure 3 shows one of the screens or side walls defining the structure and the chassis on which it is mounted.
Figure 4 shows the adaptation of one side of the knocked-down fruit collecting tray set to fruit trees and its operating mechanism, the air thrust system and a collected fruit transport and removal device, with the option of using rotating bands with the same purpose as the collecting trays and using soft materials for delicate fruit.
Figure 5 shows the collecting device formed by a group of trays with free variable sloping and another removing and transporting device of the collected fruit to a large capacity-transporting vehicle, such as a trailer.
Figure 6 is a floor view of the two collecting tray sets placed on each side of a row of fruit trees, indicating their overlapping or partial superposition.
Figures 7 and 8 are floor views of two equipment chassis or support vehicles, on each side of a row of trees, with their respective trailers for taking and loading the collected fruit.
Figure 9 is a general view of the new equipment and its transporting vehicles, applied to each side of a row of trees, and the transporting belt set of the collected fruit and with sensitive toboggans and loading on trailers and their destination.
Figure 10 is an elevated view of the intermediate fruit-transporting device after its collection for cleaning and automatic loading on a trailer or cage-type containers or vats for liquids on trailers. Figure 11 is a floor view of the transporting device set.
Figure 12 represents a piece of equipment of the type described in its version for treatment of trees with phyto-sanitary products with a recycling system.
Figures 13A, 13B, 13C and 13D represent a fragmented floating chassis carrying the described equipment, seen from the side and two ends.
Figures 14, 15 and 16 are floor, side and front views, respectively, of the rotten fruit tray-collecting device during handpicking of fresh market fruit.
Figures 17, 18 and 19 are views of the positioning device of the side screen and collection tray set as regards height and sloping.
Figures 20 and 21 correspond, overall and in detail respectively, to a variation of the new equipment in a small size version. Figures 22 and 23 represent a floor view of the hooking up system of a pulling unit to the small-sized equipment support chassis described.
Figures 24, 25 and 26 correspond to views of the bracket applied to the fruit trees of 2, 3, 4 or more feet. In figure 24 the bracket is seen in its two limit positions: closed, surrounding a group fruit trees with three feet and open or in line, before or after the previous position.
Figure 27 shows the adaptation of the bracket to an olive tree with four feet, which define an irregular-shaped figure.
Figures 28A and 28B show, in floor and elevation views, the moving device of the bracket support set on rails to become positioned from tree to tree before the equipment air generator arrives for knocking down of the following tree.
Figure 29 represents the sensitive device that acts when contact with the first foot of a fruit tree of 2, 3 or 4 feet is established.
Figures 30 and 31 show the main pressure air generator a groups of blades intended to generate air currents in certain directions and whirlwind on the vegetation for knocking down the fruit.
Figures 32, 33 and 34 show various views of the elevated regulating air projector, with jet options to spray a phyto-sanitary product in a liquid state or dry or humid powder state.
Figure 35 shows in detail the knocked-down fruit colleting device and support of the height-adjustable collecting trays towards the feet of the trees, and figure 36 a floor view of the device itself.
Figure 37 represents the optional suction device for recovering and recycling the phyto-sanitary product leftover from that applied to the trees in treatment.

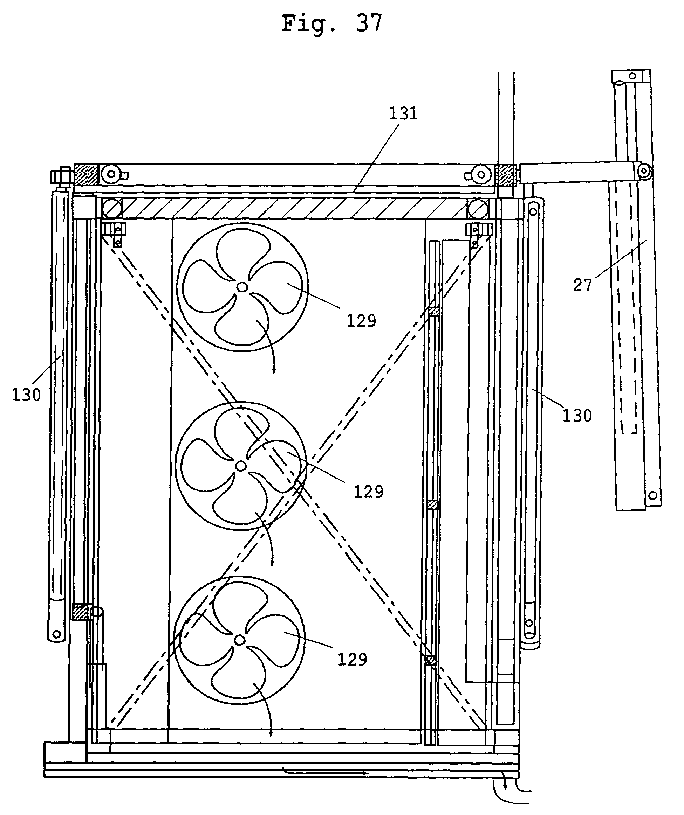

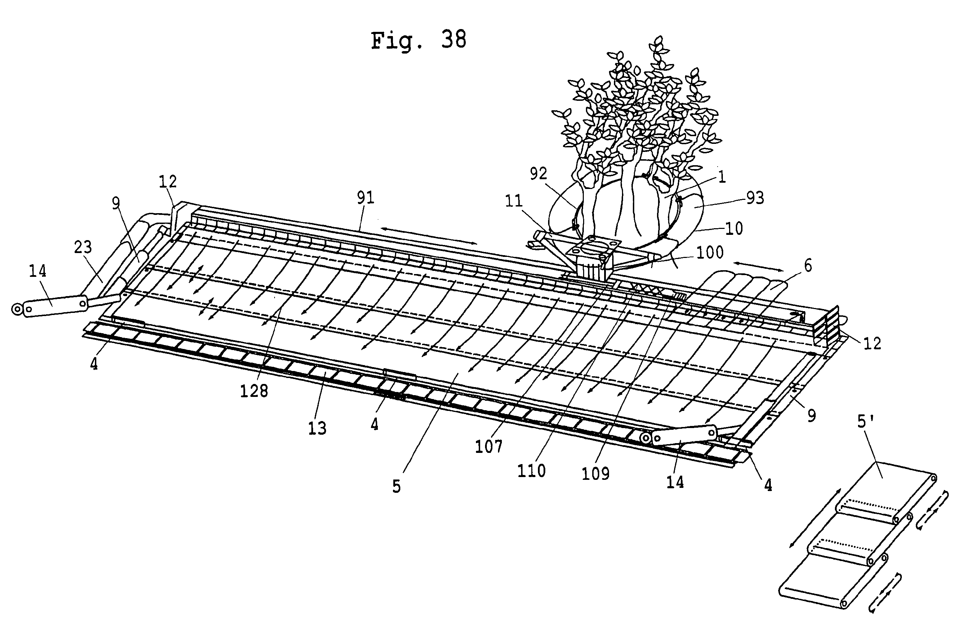

Figure 37 shows a perspective view of the complete collecting set indicating the two possible and exchangeable versions of a collecting tray 5 in the form of a rotating belt.

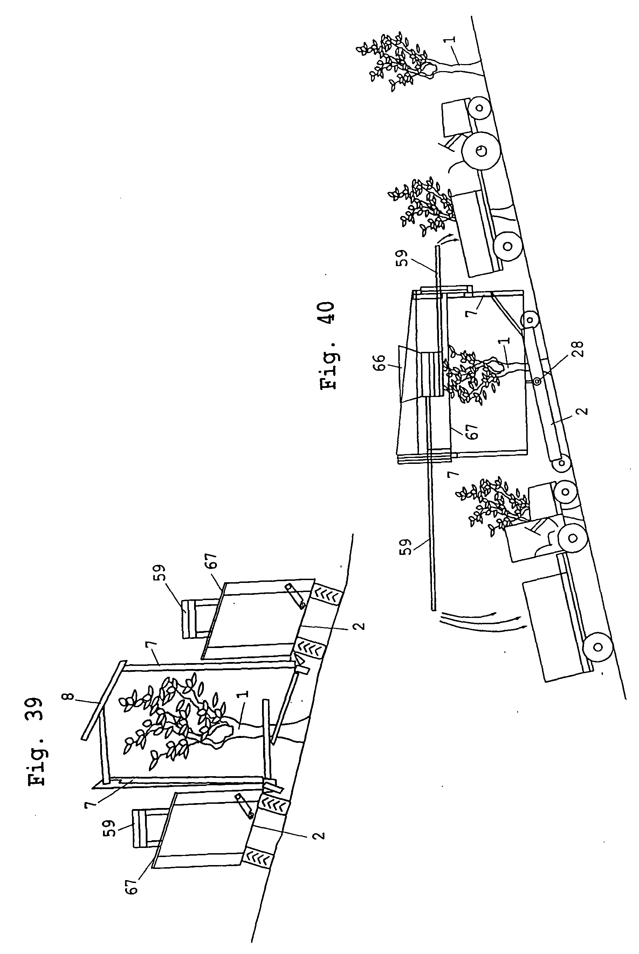

Figures 39 and 40 indicate positioning of the equipment components in two cases of sloping terrain.

### DETAILED DESCRIPTION OF THE INVENTION

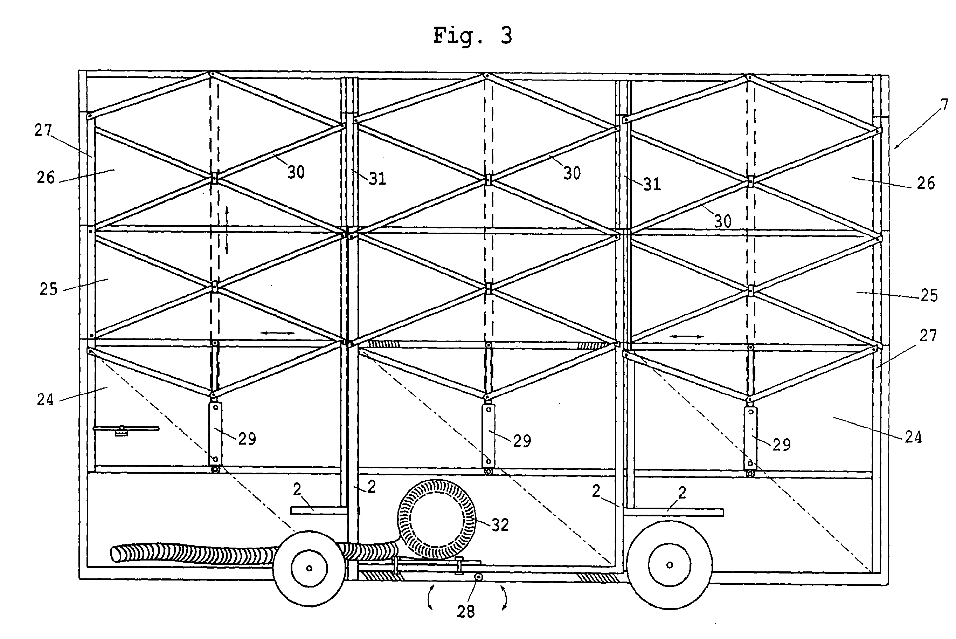

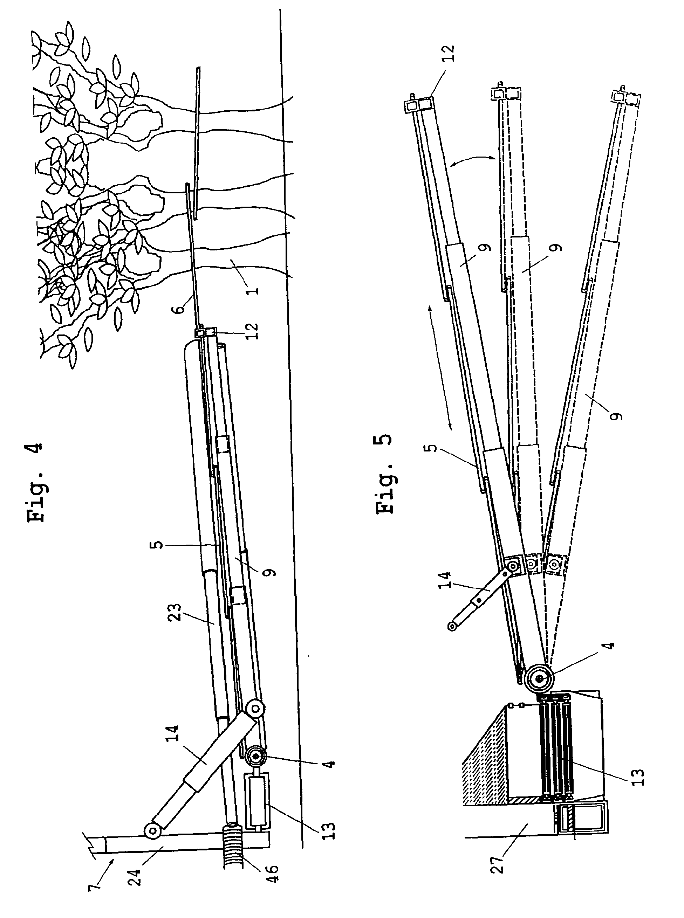

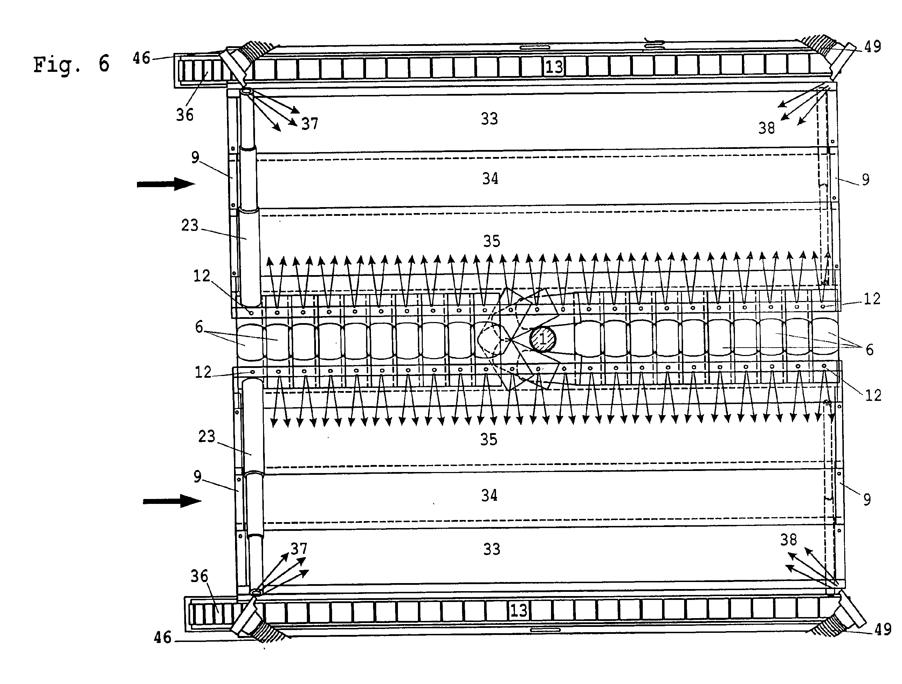

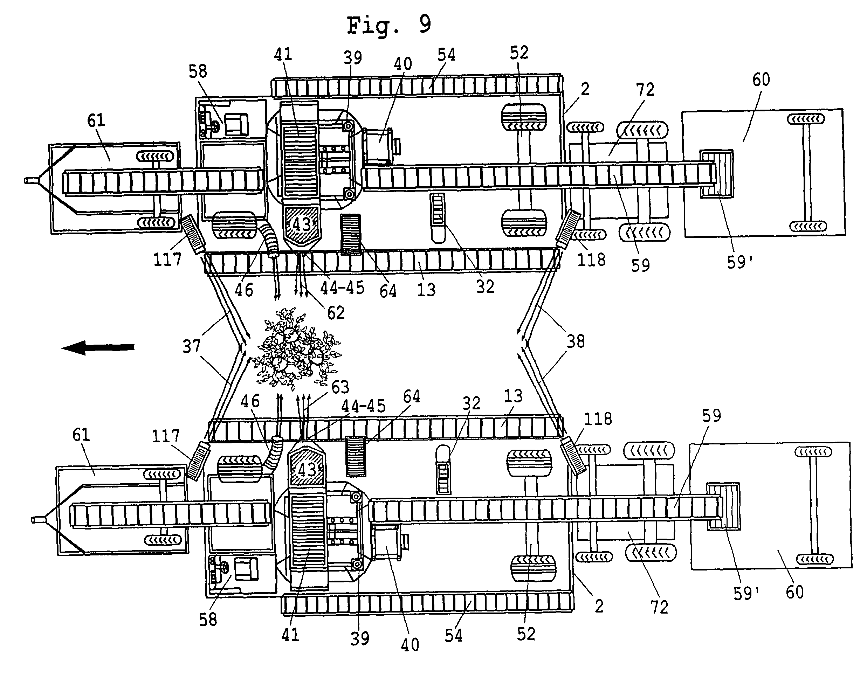

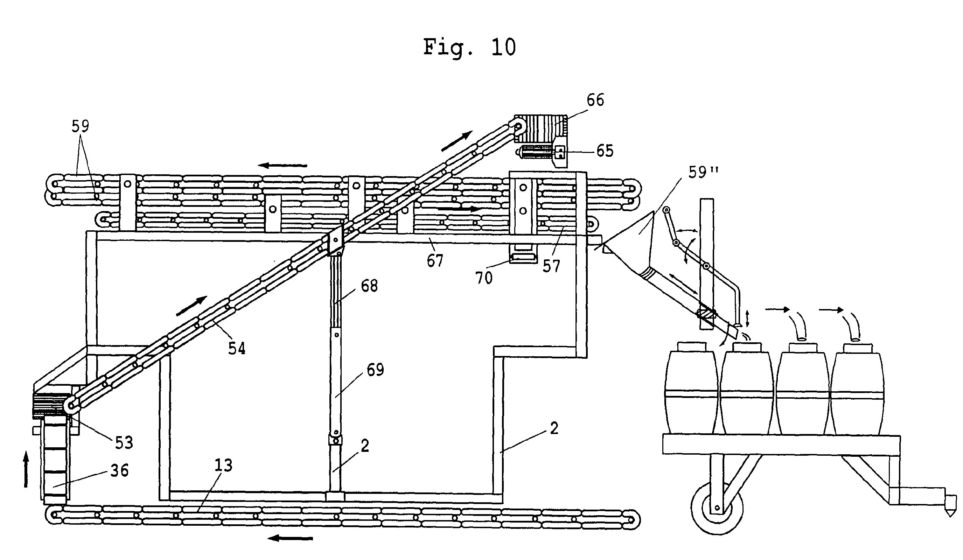

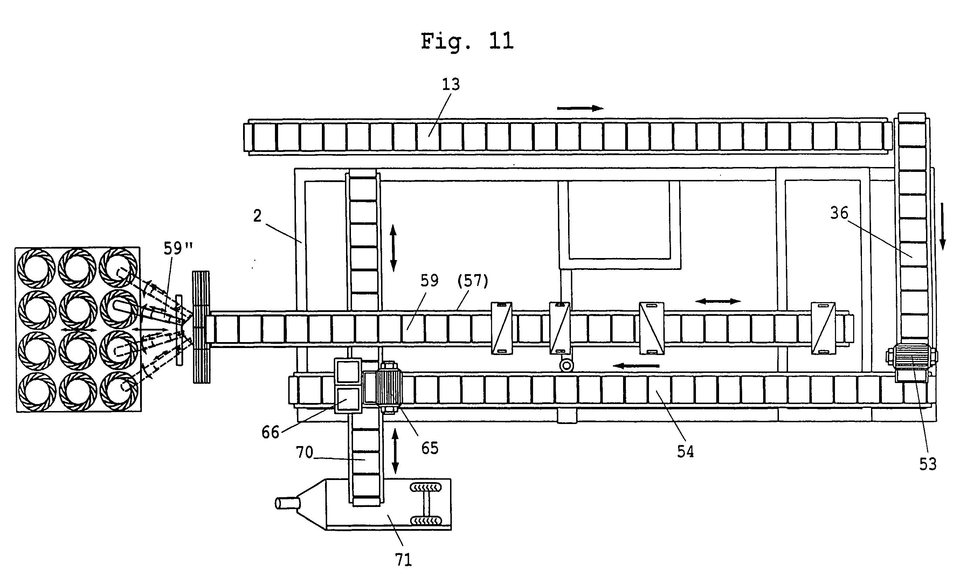

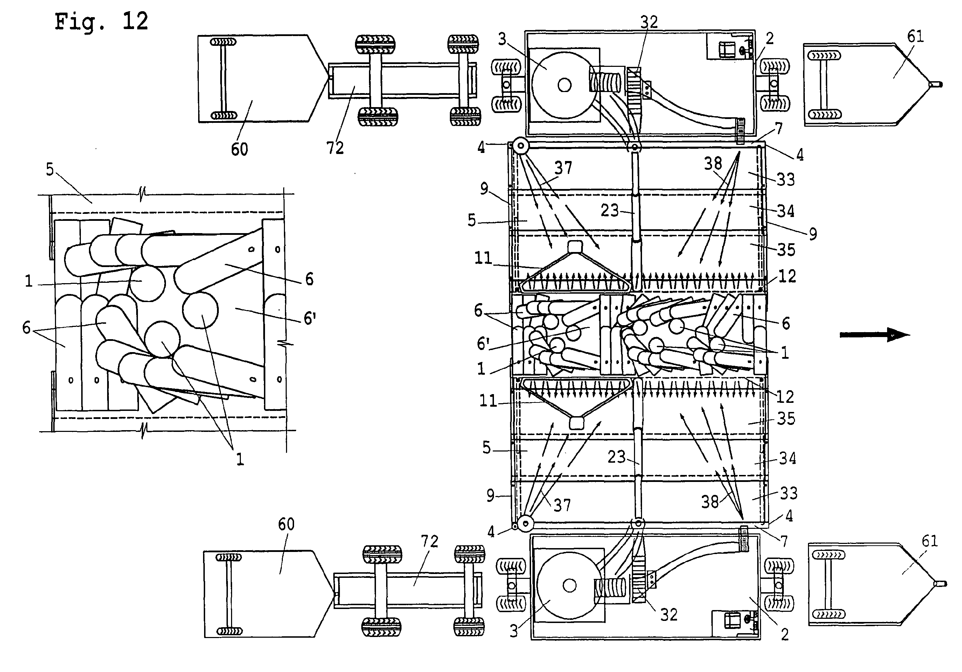

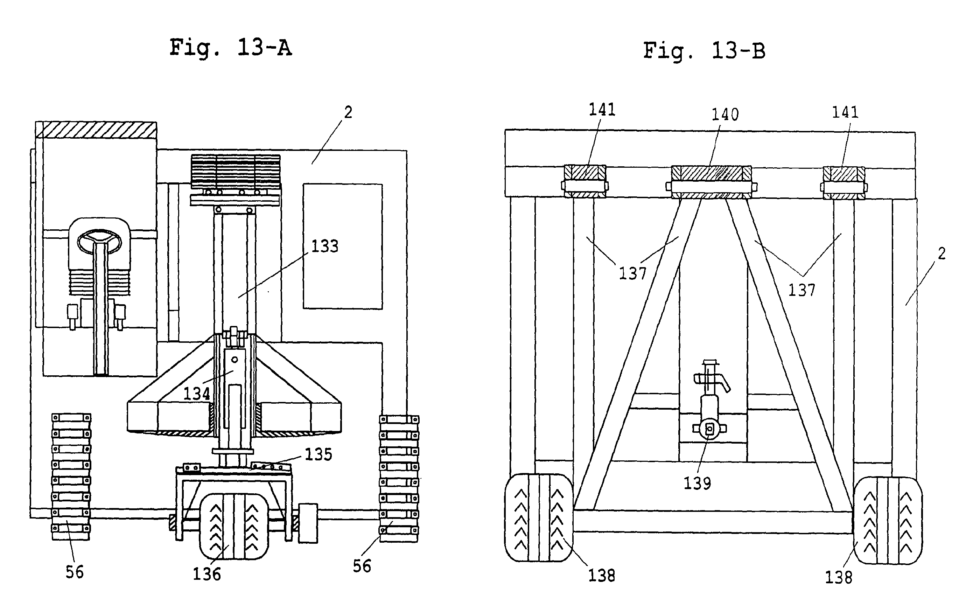

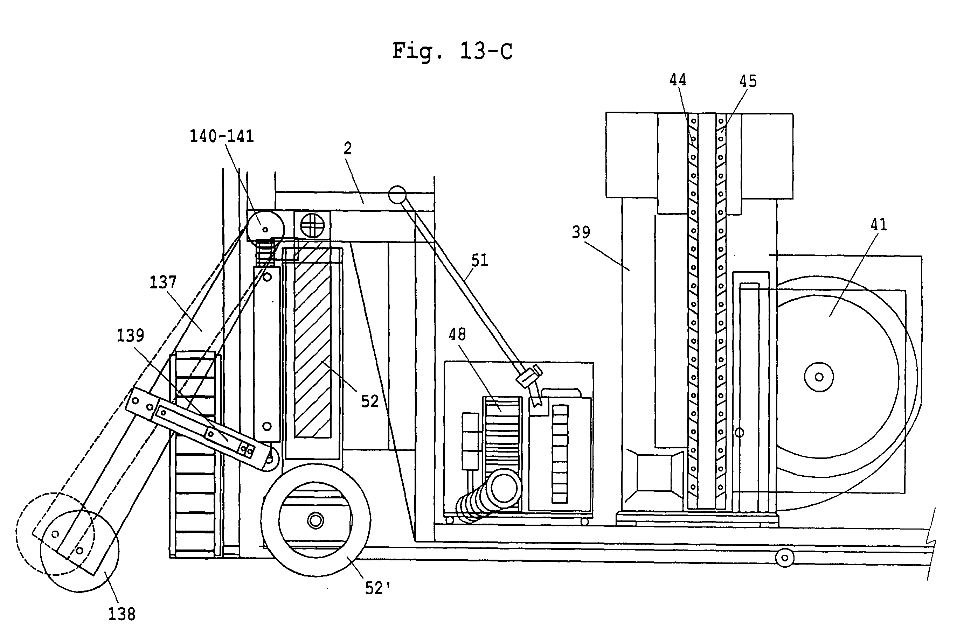

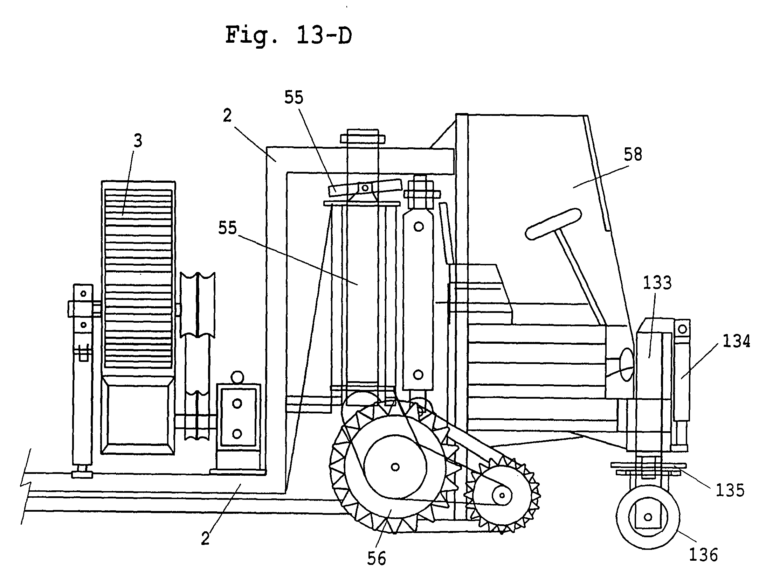

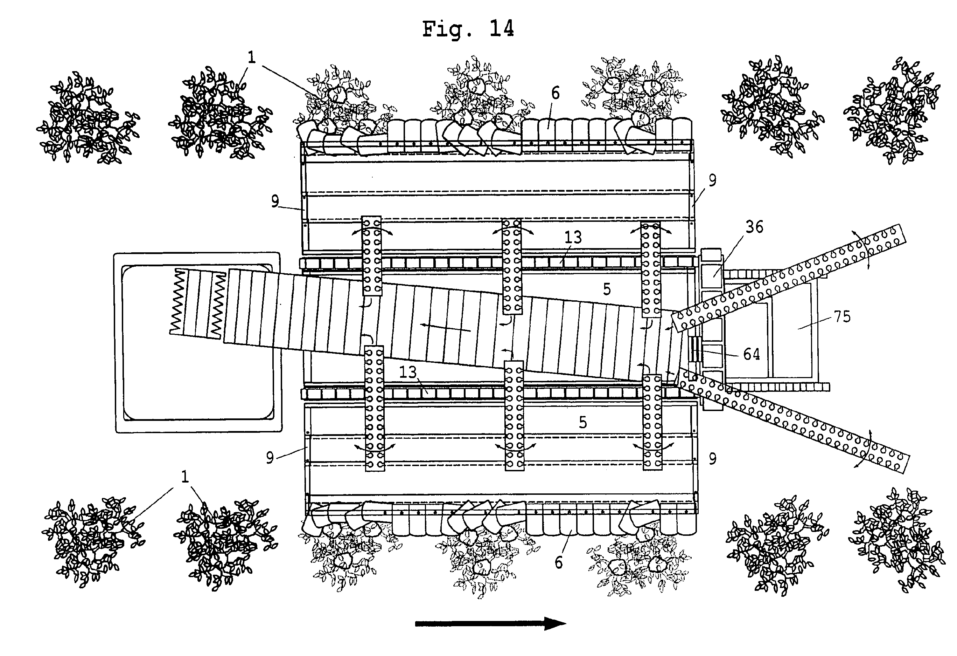

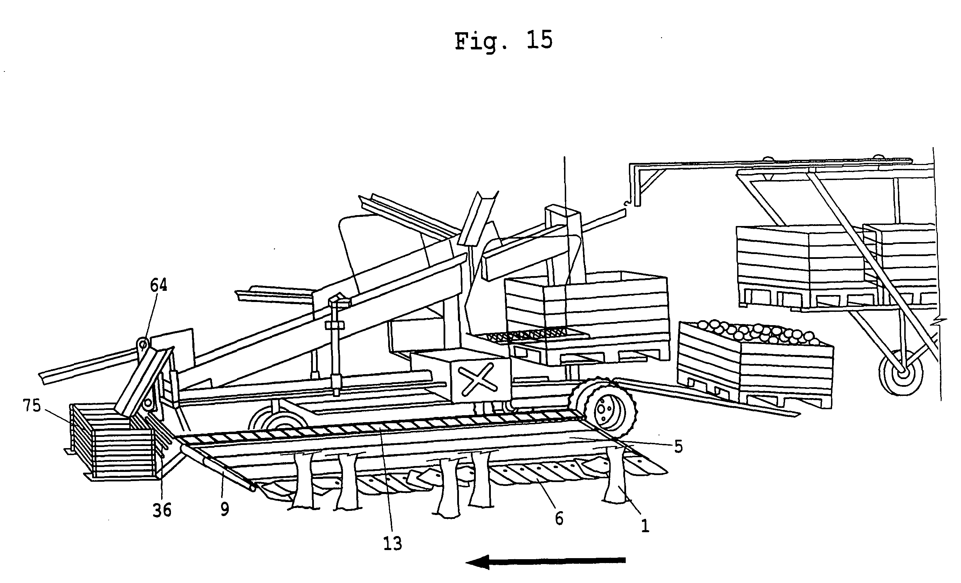

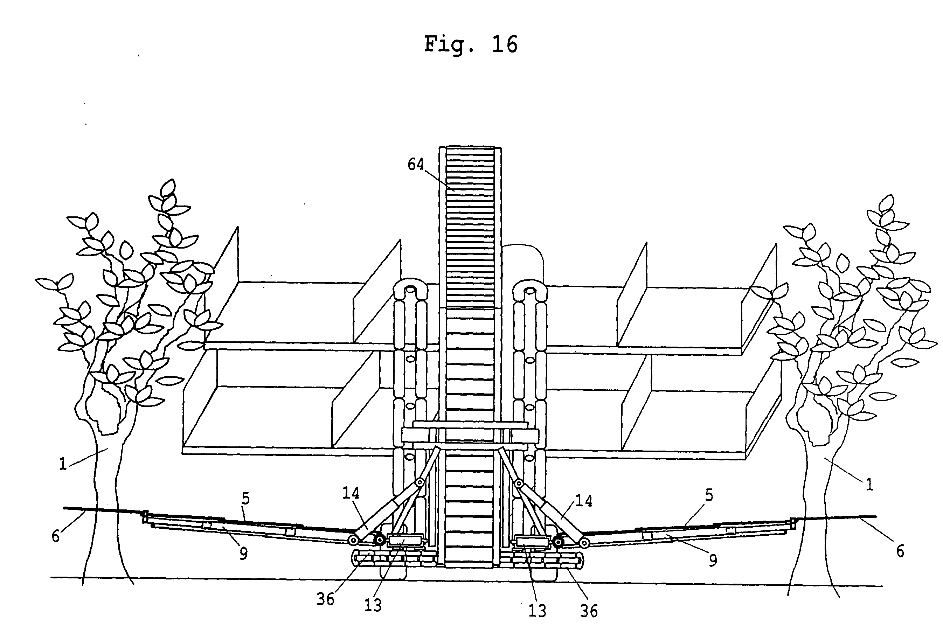

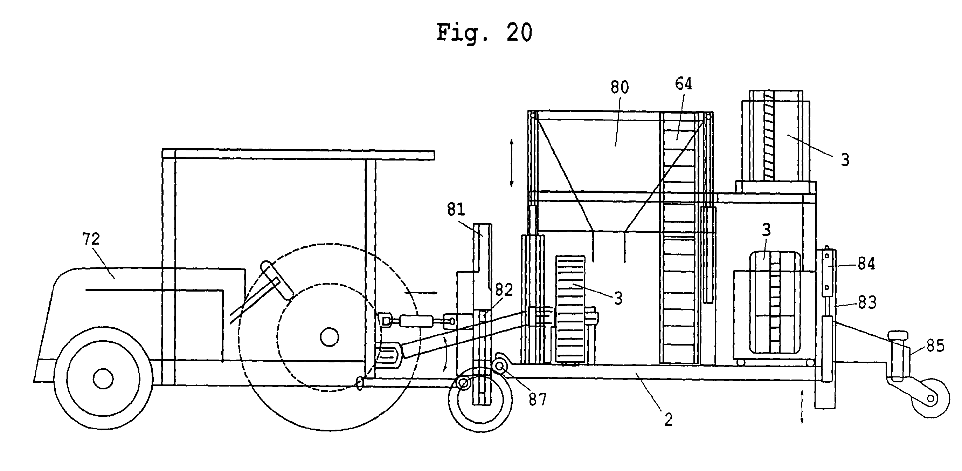

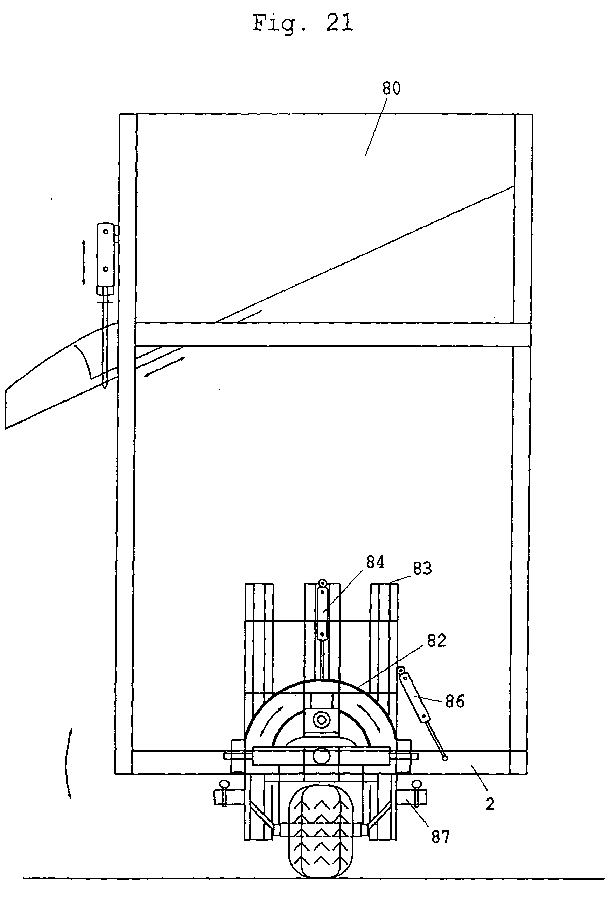

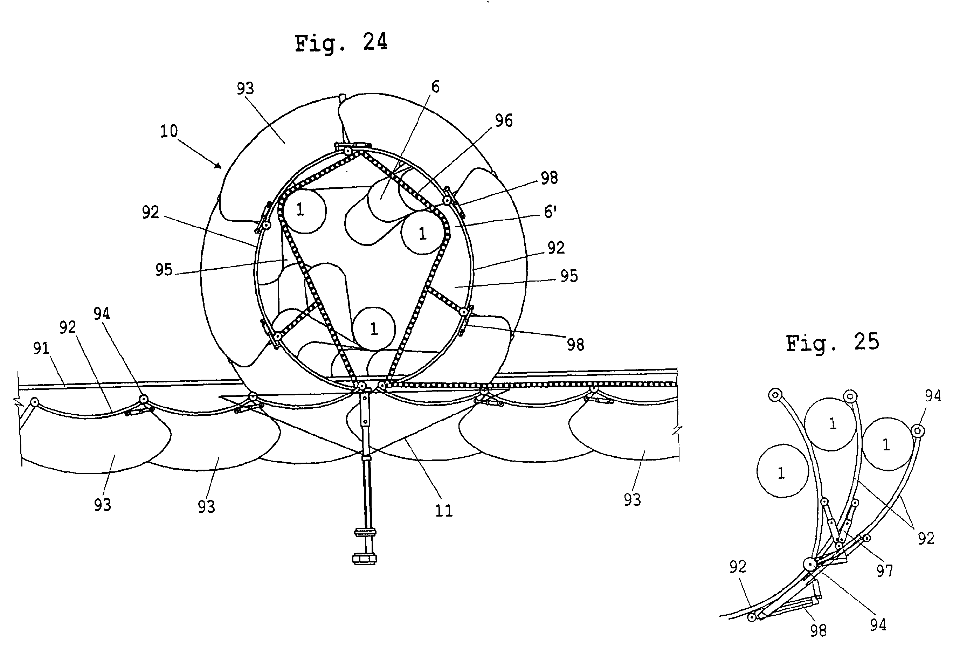

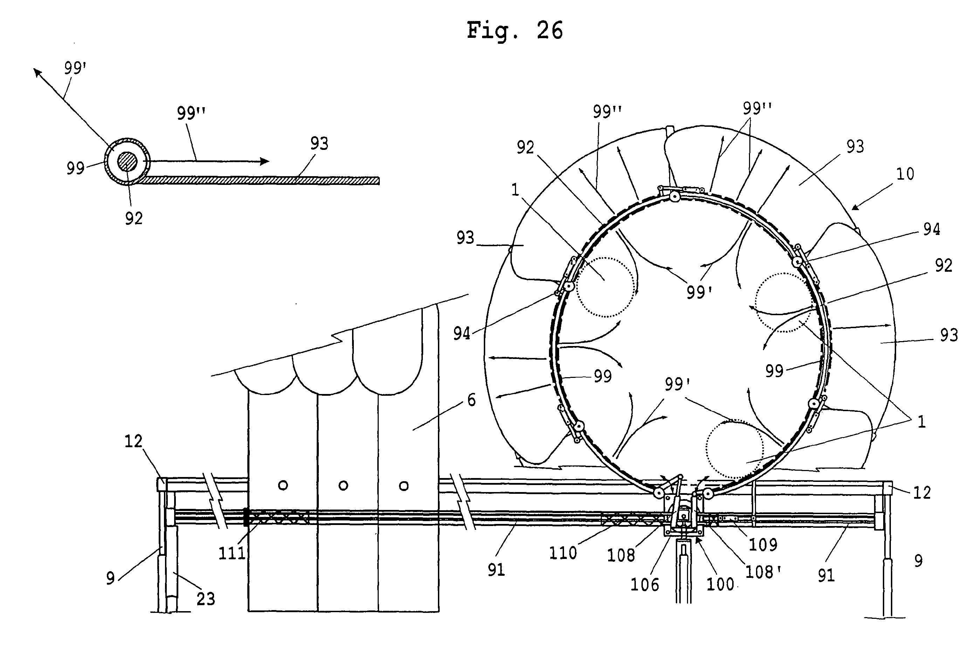

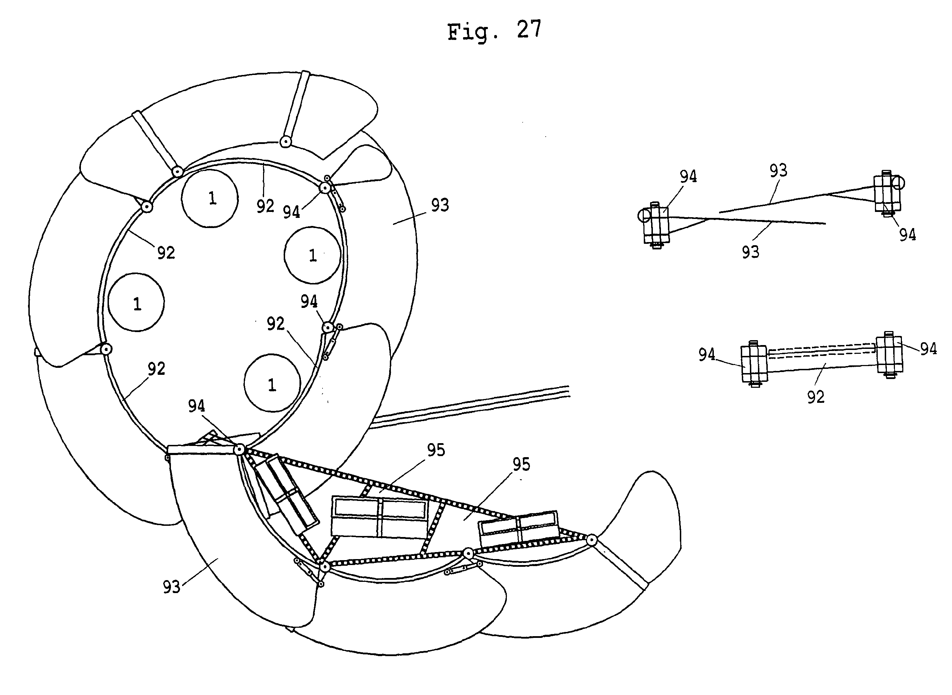

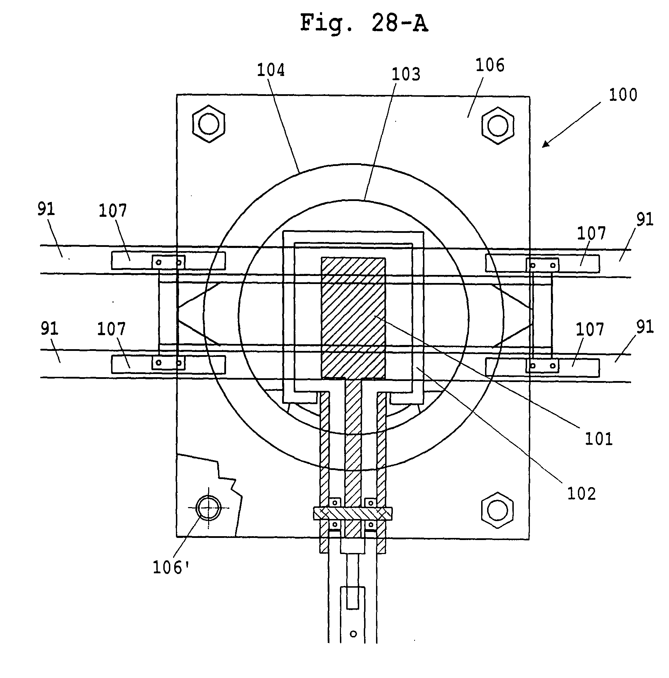

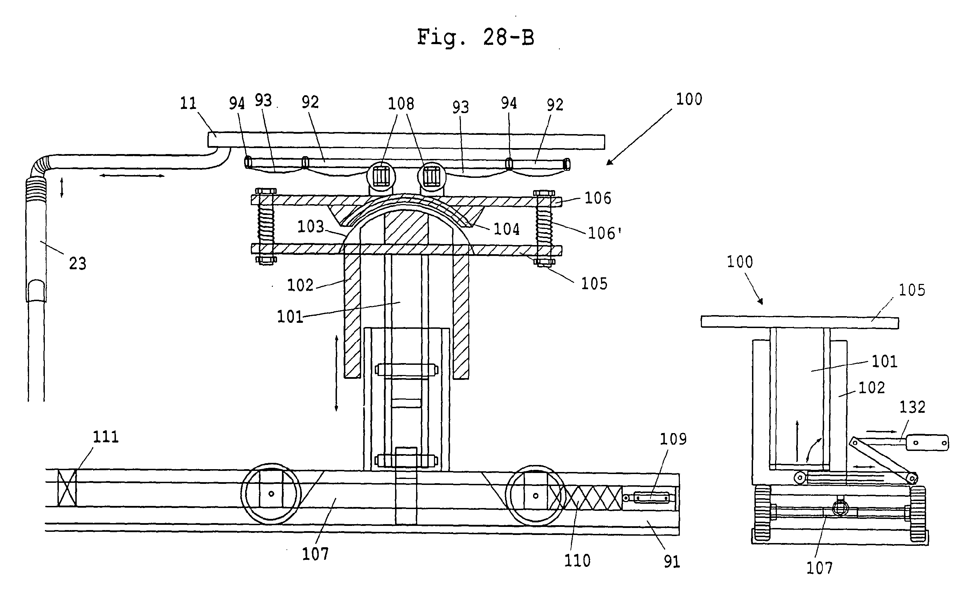

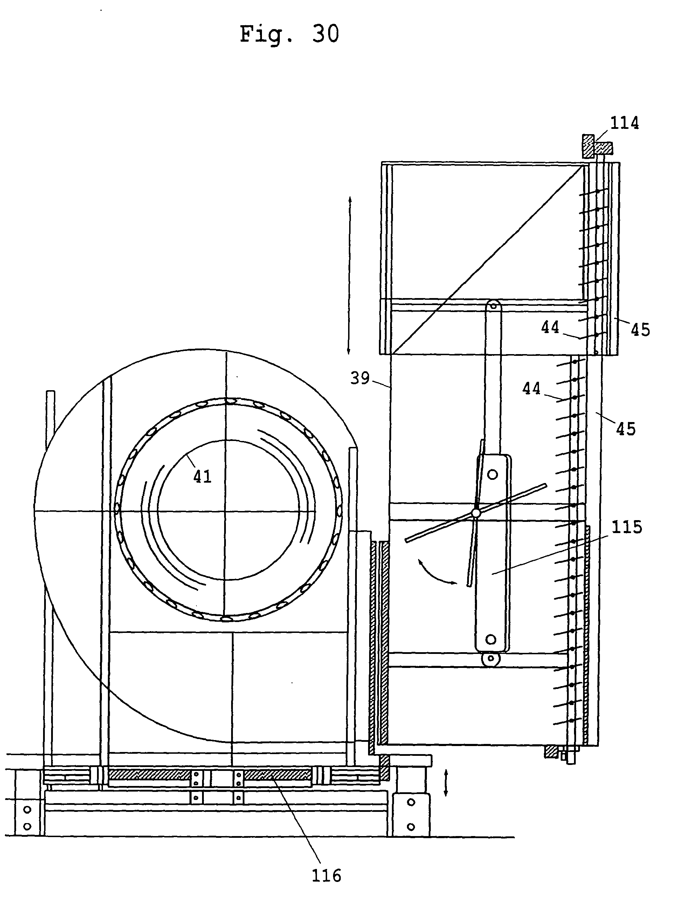

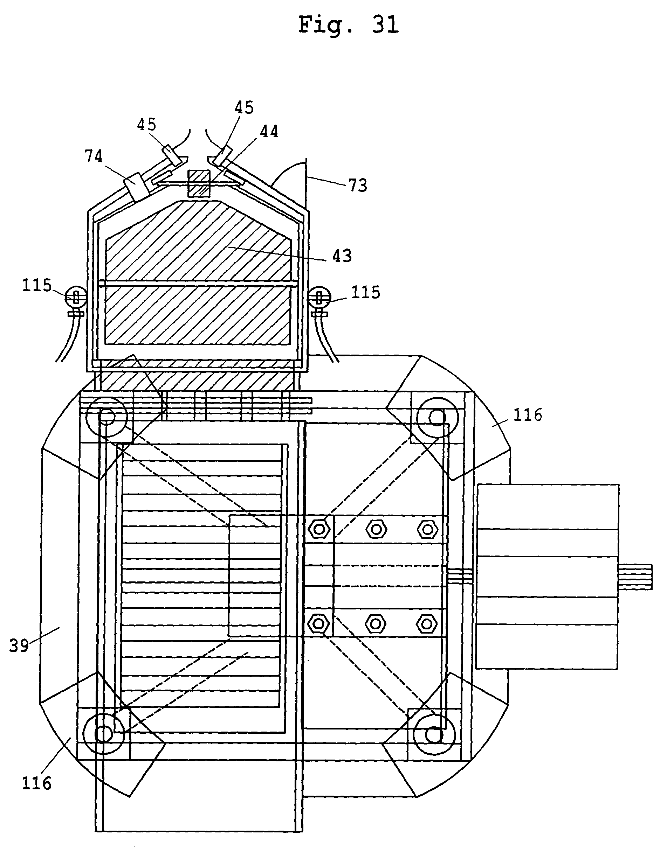

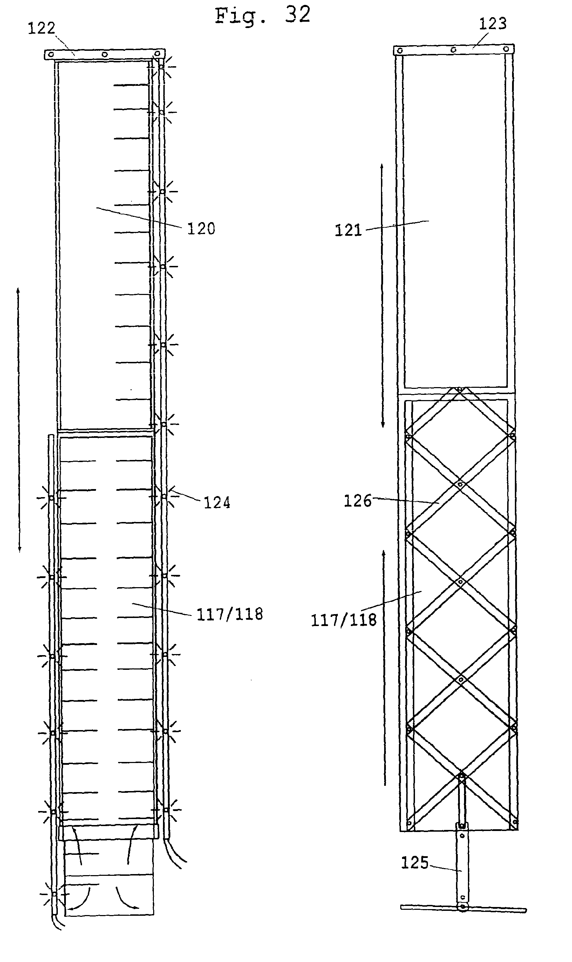

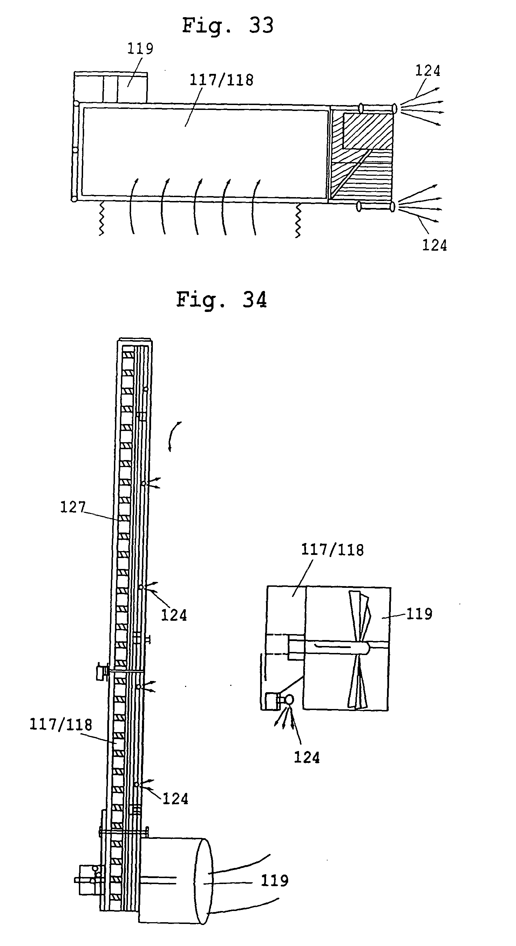

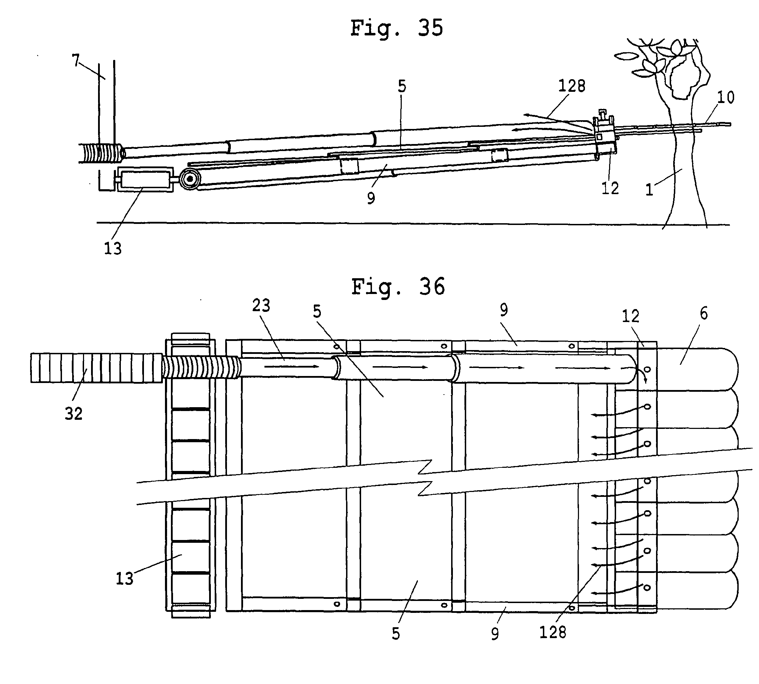

The elements designated with numbers in the drawings correspond to the parts indicated below:

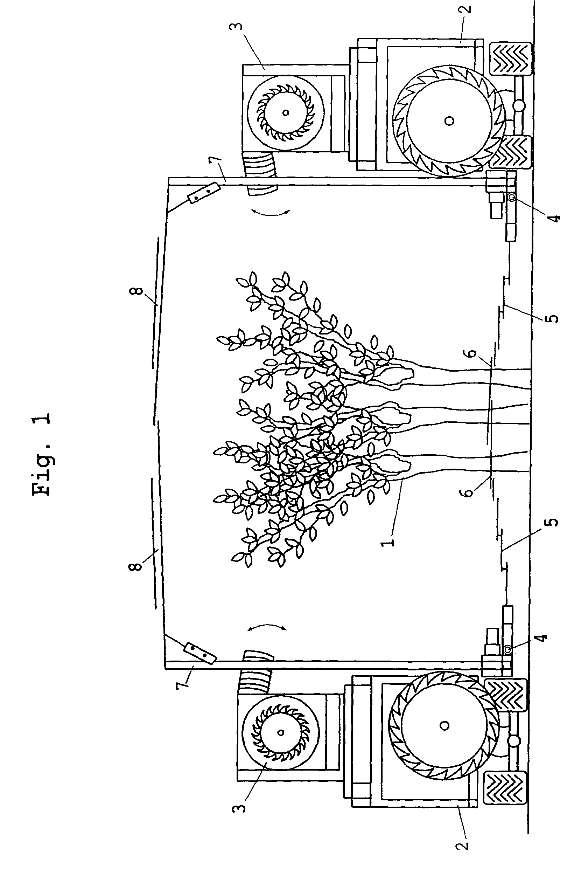

In figure 1:
   1, tree pertaining to a row of plantation fruit trees, which in this case have three feet or trunks.
   2, each of the equipment chassis or mobile support vehicles.
   3, each of the small-sized air generators, operating whirlwind air and/or for operating various devices.
   4, each of the rotating supports of the collecting tray groups.
   5, telescopic and overlapping collecting tray groups, made of plates that, once in their operating position, are attached during collection of the fruit or else move along sliding transporting belts on rollers.
   6, groups of movable slides adjustable to the feet of the trees 1, forming 6' spaces when surrounding and contacting the feet of the trees.
   7, height-adjustable reticulated screens forming the side parts of the enclosure defined by the equipment.
   8, covers that are articulated and foldable by means of a suitable mechanism with pneumatic or hydraulic cylinders forming the upper part of the enclosure defined by the equipment.

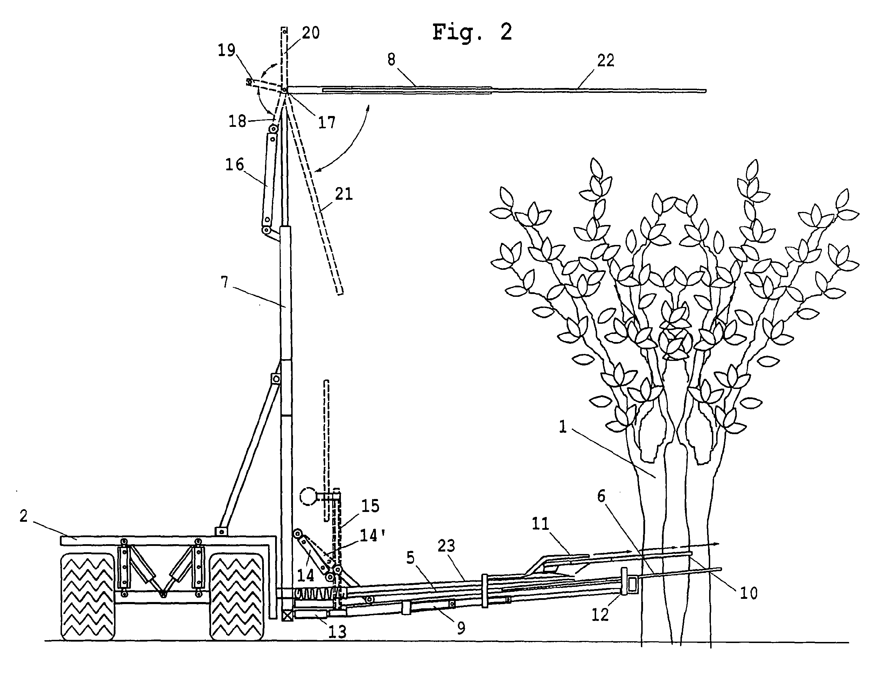

In figure 2:
   9, pneumatic or hydraulic cylinder mounted on a telescopic support.
   10, bracket set applied to the feet of tree 1.
   11, pneumatic blower of the fruit falling on the central dripping surface in trees with 2, 3 or 4 feet and their external periphery, bracket and collecting trays.
   12, quadrilateral-shaped tubular support for the group of trays and, in turn, blower on the trays 5 for moving the knocked-down pieces of fruit by means of thrust air currents towards a collecting device.
   13, collecting device formed: by a conveyor belt carrying the harvested fruit in order outside the equipment and its load to a trailer or container, or else by a recycled phyto-sanitary liquid-carrying channel to be returned to the tank.
   14, pneumatic or hydraulic cylinder for recessing the set
   15, folded collecting trays
   16, pneumatic or hydraulic cylinder operating the covers 8
   17, rotating point for folding the covers 8
   18, 19 and 20, positions of the articulated arm of the covers 8
   21, folding position of the cover
   22, telescopic panels forming the cover 8
   23, telescopic air duct for the set intake circuit
In figures 3, 4 and 5:
   24, total width fixed screen panel
   25 and 26, total width telescopic panels superimposed on panel 24
   27, panels frames with adjustable positions
   28, rotating point of the screen support permitting its leveling according to the slope of the terrain
   29, cylinders operating the articulated braces 30 forming, with the panels the extensible structure of the side screen
   31, telescopic supports of the screen set
   32, air turbine generator for the general pneumatic circuit of the equipment
In figure 6:
   33, first fixed collecting tray
   34, second collecting tray superimposed on the first
   35, third collecting tray superimposed on the second
   36, ascending and back fruit outlet conveyor belt
   37 and 38, air currents at convenient and adjustable speeds forming a barrier for the fruit being knocked down and/or for spraying the phyto-sanitary product to be applied to the fruit trees.

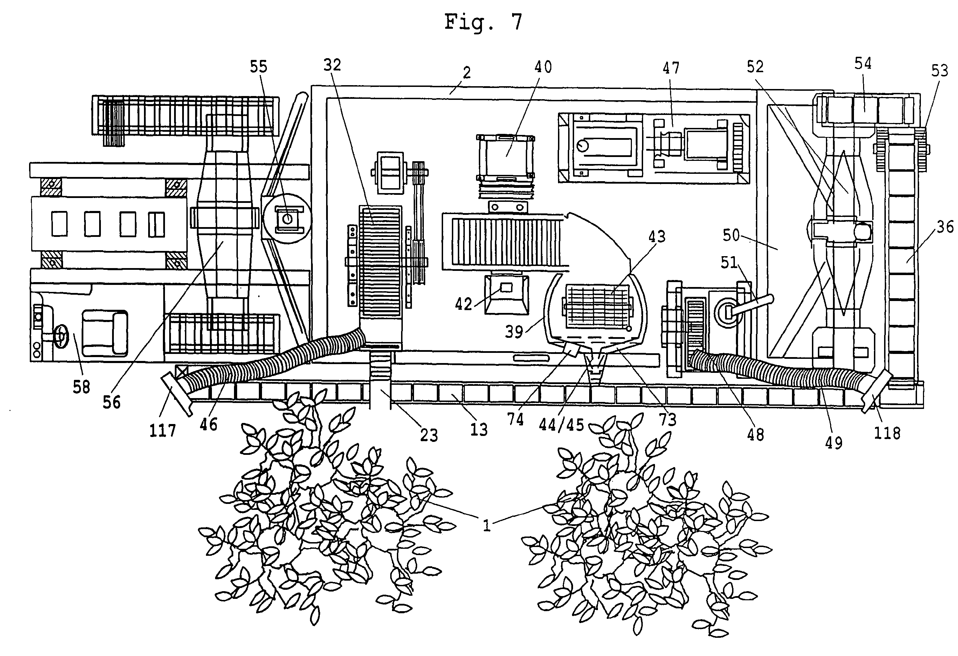

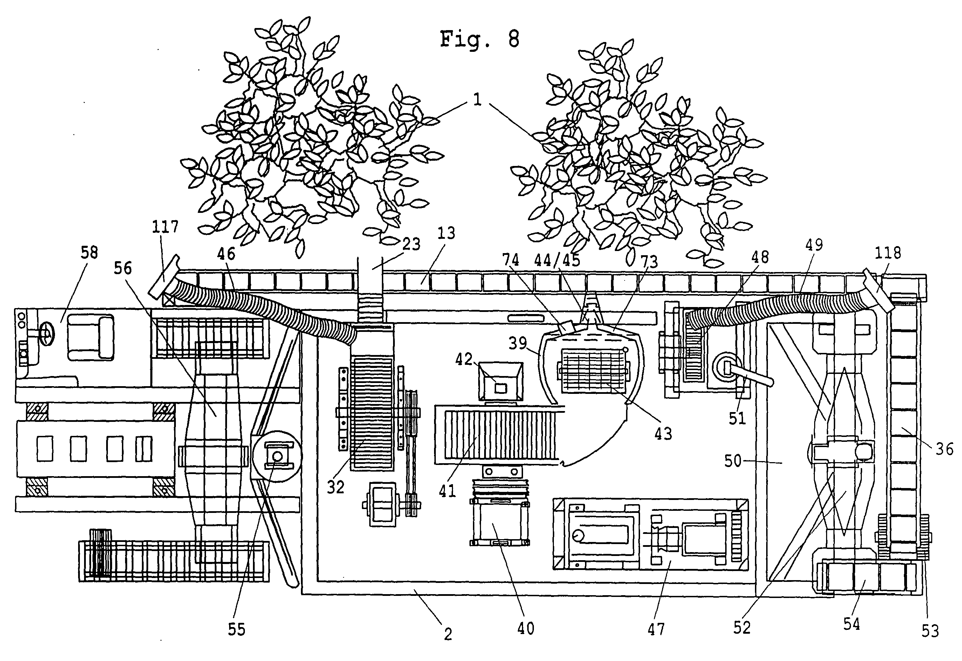

In figures 7 and 8:
   39, variable height tower for generator pressure air with floating and vibrating plate
   40, motor and 41, turbine generating pressure air with speed current up to 250 km/hour for knocking down the fruit
   42, regulating tank of a powder phyto-sanitary product
   43, interior elevating platform for generator maintenance
   44 and 45, interior and exterior mobile blades, respectively, with alternate movement, for directing the air in two perpendicular directions, horizontal and vertical, forming a whirlwind, with 73 being a access door to the pressure air generator column and 74 an optional air intake of the main generator.
   46, air duct forming the currents 37
   47, electric generator group option for supplying the devices and electric motors and lighting installation for operating the equipment at night
   48, air generator with liquid impelling device for knocking down the fruit and spraying with the phyto-sanitary product
   49, air duct
   50, water vacuum tank for spraying during treatment, supplying the air generator 48 through duct 51
   52, back axle set of vehicle 2
   53, first air generator turbine for cleaning the harvested fruit
   54, ascending side conveyor belt
   55, support plate and chassis 2 hook for rotating
   56, front traction set with exchangeable wheels or chains
   57, fruit conveyor belt to a loading trailer (see figures 10 and 11)
   58, cabin for the equipment operator
In figure 9:
   59, telescopic conveyor belt with toboggans 59', adjustable as regards the load of each trailer 60 and 61, parallel to the line of trees in narrow and/or transversal plantation to the line of trees in wide "streets" with side loading on the trailer.
   60, equipment back trailers
   61, front trailers for simultaneous and exchangeable loading
   62 and 63, air currents in opposite directions for knocking down the fruit
   64, vertical elevator, optional
In figures 10, 11 and 12:
   65, second air turbine generator for cleaning the harvested fruit
   66, chute regulating the flow of the harvested fruit for uniform delivery to the loading belts
   67, cover or work plane of chassis 2 or service platform
   68, cylinder rod 69 to raise the position of the ascending conveyor belt 54
   70, belt perpendicular to the chassis in wide plantation
   71, loading trailer according to the wide plantation work option
   72, equipment pulling tractor
In figures 13A and 13D:
   Apart from the elements with reference numbers mentioned in the above figures, the following must be mentioned:
   133, telescopic support column set
   134, hydraulic cylinder for regulating the height of the adjustable wheel 136 set 135 or the option for a bascule axle with two wheels
   137, support with wheels 138 to raise the chassis 2 by the hydraulic cylinder 139
   140 and 141, central and lateral rotating and articulating axles
In figures 14, 15 and 16:
   The option of mounting a fruit-picking group 75 for rejected fruit (not apt for eating fresh) is indicated in floor and perspective views.

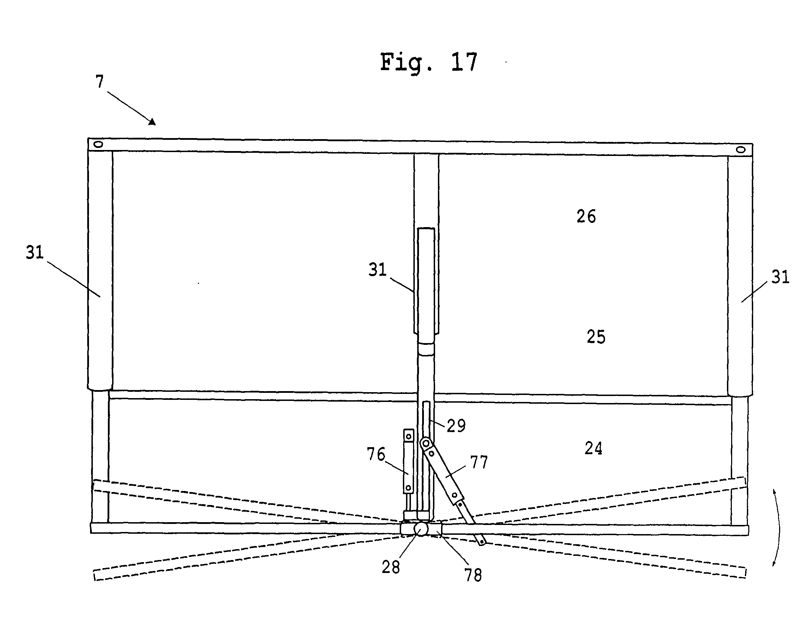

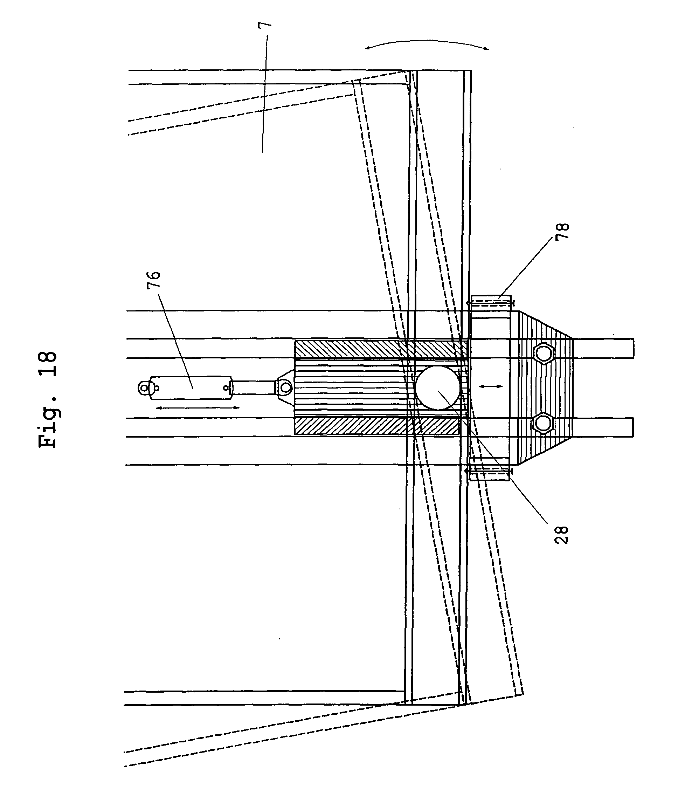

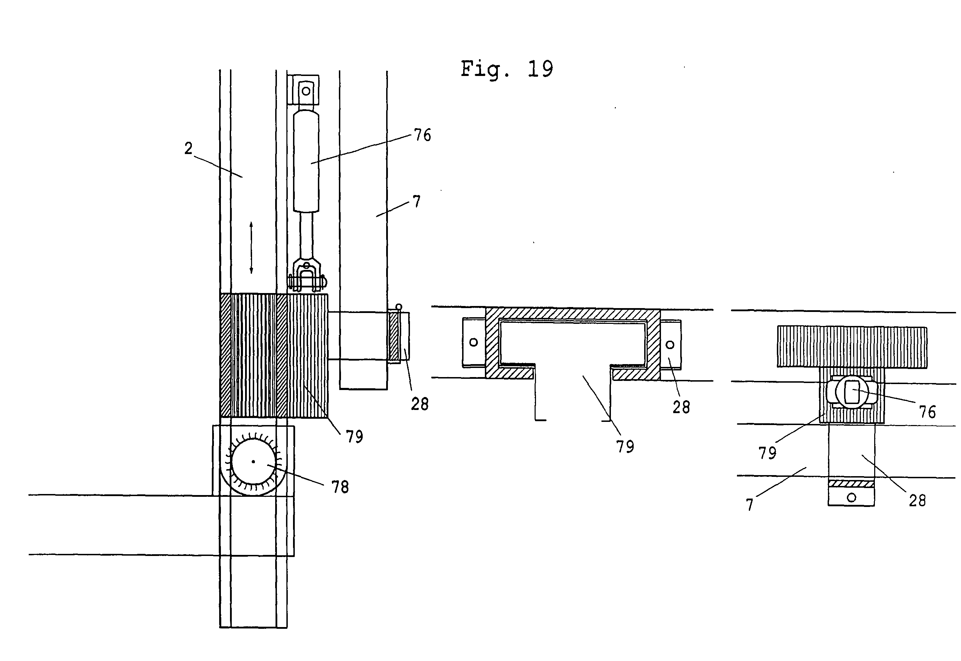

In figures 17, 18 and 19:
   76 and 77m height and inclination regulating cylinders, respectively, of the screens 7 during collection of the knocked down fruit
   78, adjustable horizontal support of the screens 7 for sloping terrain
   79, sliding vertical support for regulating the height of the screens 7
In figures 20 and 21:
   A simplified version of the equipment, suitable for operation on difficult terrain, is represented.
   80, fruit receiving hopper, bascule or fixed
   81, support suspended on the tractor arms with level compensating rotating plate for fast hook-up to the jeep chassis. A bascule axle and two loose wheels for rotating and compensating levels are optional.
   82, chassis hook-up support rotating plate, height-adjustable and level compensating.
   83, vertical guided support, height-adjustable for the loose wheel or two-wheel device, level compensating.
   84, height-adjustable cylinder on the back part of the chassis.
   85, loose wheel or two-wheel option support and device to facilitate rotation.
   86, cylinder for leveling the inclination of the wheel axle on sloping terrain.
   87, fast hook-up bolts of the loading trailer.

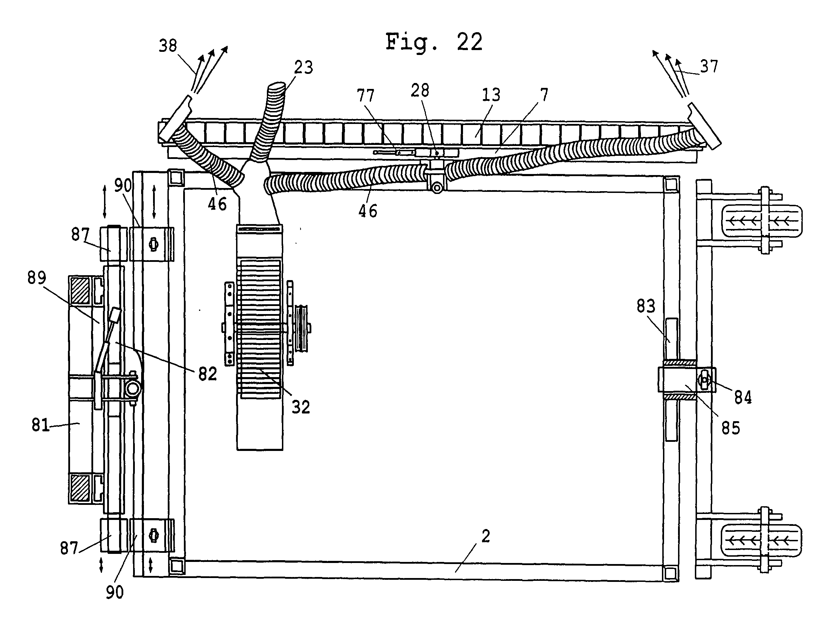

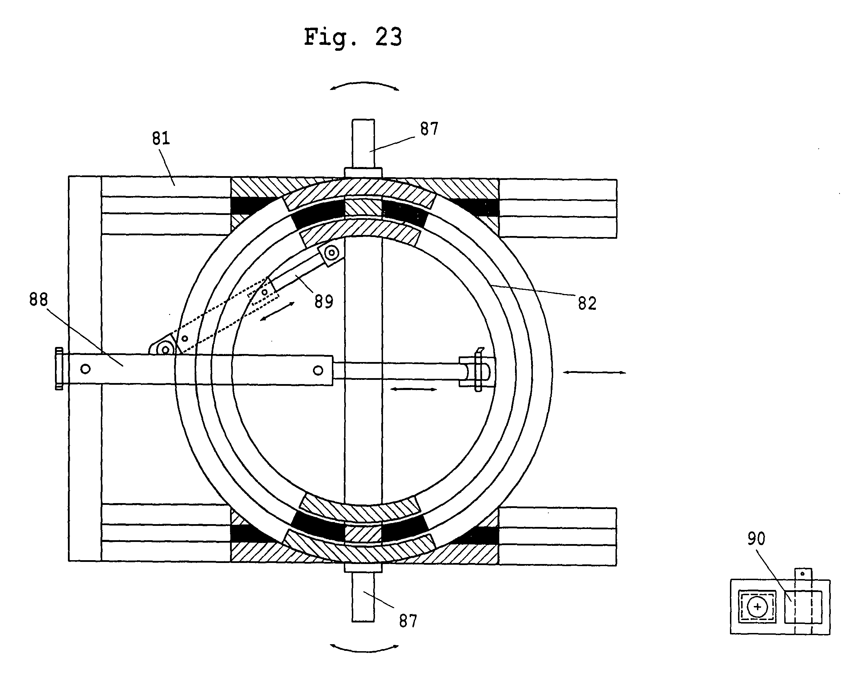

In figures 22 and 23:
   88, elevating cylinder of the hook rotating plate 82
   89, bascule cylinder for regulating the inclination of the plate 82
   90, fast hook clamps of the loading trailer slide-adjustable
In figures 24 to 28:
   91, rail for sliding the clamp set for optimum adaptation to the foot or feet of the fruit trees
   92, semi-circles forming the clamp applied around the three feet of tree 1
   93, visors or elements shaped as circular crown sectors, adjusted to the elements 92 of the clamp to maximize the knocked-down fruit collection surface
   94, articulation bushings of the semi-circles 92 of the clamp
   95, pleated or double-wall cloth elements defining a pneumatic chamber, intended to receive the ripe fruit in pneumatic flotation thus avoiding its deterioration. These include fast handling elements suitable for closing or passing air through the pneumatic circuits.
   96, joint mechanisms between the mobile elements 92 of the clamp with elastic springs-cords and sliding spheres in contact with the feet of the trees, as suspenders of the cloth pieces
   97, extendible or retractable gas or compressed air cylinder when the semi-circles 92 of the clamp touch the trunk of a tree in order to surround it with optimum adjustment of the elements, covering the maximum fruit dripping area
   98, hydraulic cylinder for fast folding and unfolding of each semi-circle 92 forming the clamp (figures 24 and 25). Said elements are protected when in contact with the feet of the trees by flexible cork or plastic ducts 99, provided with interior 99' and exterior 99" jet air or air current outlet holes to send the fruit by raising it 30 or 40 degrees towards the center of the interior space surrounding the two, three or four feet of the trees, where it will be pushed by the air impelled by the horizontal blower 11 with a greater force on the clamp and towards the trays 5 of equipment located on the other side of the tree in questions, thus avoiding the knocked-down fruit falling to the ground. The effect of the inclined and ascending air outlets 99 is to avoid the fruit falling into the spaces formed by the slides 6 during their rotating movement as contact with the exterior of the feet of the tree 1 is established.
   100, in figures 28A and 28B, functional set of the clamp (19), mounted on the rail 91 and formed by a telescopic axle with a vertical male 101 and female 102 element carrying the fixed semi-spherical element 103 on its upper part, which forms a ball-and-socket joint mechanism with the mobile semi-spherical element 104. This set is height-adjustable by the cylinder 132 and is associated to the horizontal plate 105 that serves as a base for the floating plate 106, with telescopic support and spring pipes 106 associated to the semi-spherical element 104.
   107, cart on wheels set for support and displacement of the clamp set on the rail 91
   108 and 108', pneumatic and hydraulic cylinders for opening and closing the clamp and working its two arms
   109, pneumatic or hydraulic cylinder regulating the displacement speed of the clamp set, working the extendible mechanism 100 up to the end-of run butt 111 on the following tree, in front of the air generator 39 for knocking down the fruit.

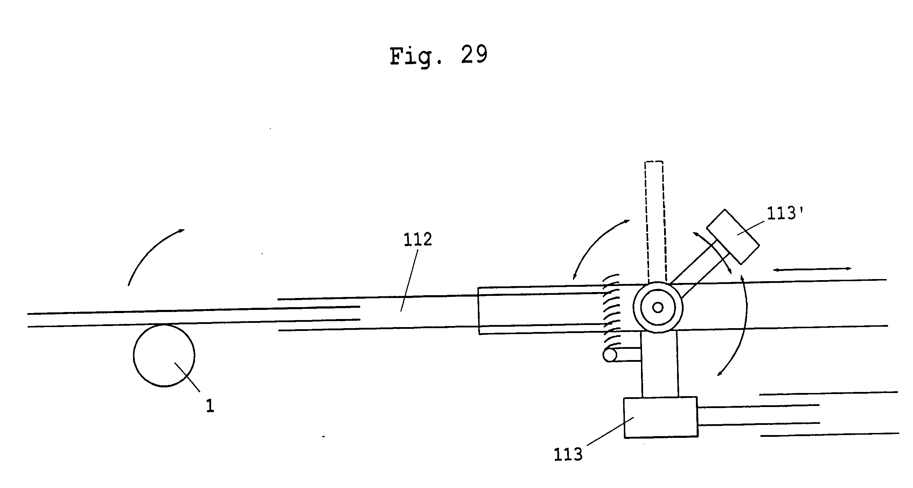

In figure 29:
   112, telescopic and retractile mechanism forming a contact sensor with the first foot of the fruit tree 1 in the direction the equipment on the line of trees with 2, 3 or 4 feet is traveling.
   113, electric contact with a contactor element 113' associated to the working circuit of the cylinders 108 and 108' (figure 26) for the opening movement of the clamp (right arm) and fast displacement to the next tree
In figures 30, 31, 32, 33 and 34:
   114, motor reducer for intermittent movement of the defecting blades 44 and 45
   115, pneumatic or hydraulic cylinder for regulating the height of the air generator 41 tower 39
   116, rotating plate, either floating or vibrating, with alternate movement in small semi-circles to contribute, together with the blades 44 and 45, to the production of a maximum air whirlwind
   117 and 118, pressure air projectors, also seen in figure 7, forming the currents 37, respectively, for operating an air barrier and, during phyto-sanitary treatment, spraying of the products to this end, and 38 only for the air barrier in both options
   119, air inlet
   120 and 121, females extensions of the tower to adjust its height in accordance with the height of the trees
   122 and 123, upper lids
   124, sprayed jets of a phyto-sanitary product for treating fruit trees
   125, cylinder for regulating the working height in accordance with the height of the trees
   126, height-adjustable extendible mechanism for extending prolongations 120 and 121 accordingly
   127, fixed and adjustable blades for suitable adjustment of the projector air
In figures 35 and 36:
   128, impelled air currents of the fruit knocked down towards the collecting belt or conductor channel 13
In figure 37:
   129, optional inlets for recycling the surplus phyto-sanitary liquid
   130, height-adjustable cylinders of the suction device
   131, telescopic panels carrying the inlet 129 for regulating their height in accordance with the working height of the set and the height of the trees.

The following aspects must be emphasized as regards the above description:

The knocking down of ripe pieces from the fruit trees is verified by successive passes and preferably by blowing with air currents at suitable speed and flow that are adjustable accordingly, produced by the generators indicated for simultaneous knocking down and, in turn, obtaining of a semi-classification of the ripened fruit. The fruit is also pushed pneumatically (by air) towards the main collecting belt. Unripe fruit is left on the trees for future harvesting according to the varieties produced. All this is carried out with no mechanical contact with the trees, which suffer no damage and neither the unripe fruit.

To avoid knocking down some fruit whilst the clamp set (100) slides, there should be a gate that closes during the movement and opens when the clamp is on the feet of each successive tree.

Optionally, an ultrasonic wave generator device may be used to knock down the pieces of fruit.

Both fruit knocking-down systems can be applied to one side of the tree or line of trees or both sides, whilst harvesting of the knocked down fruit is always made on both sides.

Maximum coverage of the whole volume of the trees and fruit is guaranteed as regards phyto-sanitary treatment with spray being recycled in a half-closed area.

The trays 5, as indicated, may be replaced by rotating with soft material parts which are telescopic and used for ultimately sending, by conveyor belts, the delicate or flat fruit (such as almonds) to the loading trailers, for knocking down fruit from trees with very short trunks-feet or on sloping terrain, whilst the round fruit (olives and similar) may be moved by rolling along sloping planes or ramps.

The described equipment can have an electrical installation for nocturnal lighting and the possibility of operating when raining and on uneven terrain, thus taking maximum advantage of the harvesting time.

The short trip of the fruit since being knocked down to the loading means, some 20 to 30 seconds, without receiving knocks or squeezing, permits maximum performance of the harvesting operation. In the case of olive trees, this briefness avoids possible acidity in the oil produced, as the olive harvested by the described equipment passes quickly to the pressing stage.

Other advantages arising from the use of the equipment described are mechanical circulation of the harvested fruit from its knocking down and cleaning and the employment of semi-qualified laborers. The value of the harvest is thus considerably increased.

Configuration of the equipment, consisting of various autonomous devices operatively coordinated but different from each other, favors simple maintenance and low cost.

Previous preparation (pruning) of the fruit trees for harvesting the fruit and phyto-sanitary treatment of the latter and the trees themselves is not needed with the described equipment.

## Claims

1. Integrated versatile equipment for harvesting and treatment of fruit on trees, intended for the rationalized and mechanical harvesting of ripe fruit and, where applicable, treatment with phyto-sanitary products, **characterized by** the fact it includes a mobile enclosure that wraps around a fruit tree (1), individual or pertaining to a line of trees, with one or various feet, with the mobile enclosure formed by:
a. a number of height-adjustable netted screens (7) forming the lateral parts of the mobile enclosure
b. a number of foldable covering elements (8) forming the upper parts of the mobile enclosure
c. two pulling vehicles (2) carrying the structure of the mobile enclosure, as well as controlled pressure air current generators (3) for knocking down and successive pushing of the knocked down fruit and operation of different pneumatic devices
d. projector devices (117, 118) directing air current (37, 38) leaving the generators 32 and 48 under controlled pressure and directed diagonally towards the mobile enclosure forming a pressure air barrier to:
avoid undesired outlet and loss outside the enclosure of the knocked down pieces of fruit or the phyto-sanitary treatment product
air supply to a group of spraying projectors when treating with phyto-sanitary products
e. knocked-down fruit receiving devices consisting of extendible collecting trays (5) formed by overlapping and, where applicable, rotating telescopic flat elements, which are inclined according to variable angles operated by cylinders (9 and 14) and coupled to the vehicles (2) by articulating mechanisms (4)
f. mobile slides (6) associated to a support (12) of the collecting set formed by the trays (5) and adjustable to the feet of the trees (1) forming spaces (6') and defining a collecting group of the knocked down fruit that has fallen in the exterior peripheral drip zones of the trees
g. knocked down fruit collecting group defined by the tray set (5), the mobile slides (6) and their support (12), in turn blower for pushing, an optional clamp set (10) and blowers (11 and 99) that prevent the fruit from falling to the ground
h. air currents (99") projecting out towards the exterior periphery of the feet of the trees to avoid the fruit from falling to the ground through the spaces (6') formed by the slides (6) during their variable deviated contact with the feet of the trees (1)
i. complementary air current projecting devices intended to push the fallen fruit on to the above-mentioned collecting group with regard to sending said pieces towards the collecting devices (13), to conveyor belts (59), to loading trailers and, where applicable, to driving pipes (for phyto-sanitary liquids left over from spraying with regard to their recycling
j. support, articulation, direction and folding devices (4, 14, 14') of the collecting group from a functional application position of the set, with the desired inclination, to the trees up to a non-functional folding position, with a practically vertical positioning, to permit displacement of the equipment
k. articulation and positioning devices (16, 17, 18) of the telescopic elements forming the covers (8)from an extended functional covering position, noticeably horizontal, up to a non-functional position, noticeably vertical folding position in a downwards direction, to permit equipment displacement and handling
I. support devices (12) of the collecting groups and, in turn, blowers for pushing the knocked down fruit to the harvesting devices (13)
m. clamp sets (19) and their displaceable support set (100) with the blowing elements (11 and 99) of the knocked down fruit on the inside zones of the trees with 2, 3 or 4 feet and on their interior peripheral zones

2. Integrated versatile equipment for harvesting and treatment of fruit on trees, according to claim 1, **characterized by** the fact each lateral screen (7) includes:
i. A fixed rectangular panel (24) with a width equivalent to that of the complete screen
ii. A number of netted panels (25, 26), telescopically movable in the vertical direction with total width and superimposed on the fixed panel (24), operated by cylinders (29) that permit adjusting the height of the panel to the working height of the equipment, and
iii. A central and inferior rotating point (28) that permits leveling the screen according to the sloping of the terrain

3. Integrated versatile equipment for harvesting and treatment of fruit on trees, according to claim 1, **characterized by** the fact the equipment transport vehicles (2), arranged on both sides of a tree of line of fruit trees, are helped by trailers (60) for loading the harvested fruit, and include:
- A tower (39) of variable height for a pressure air generator, with a group of interior and exterior blades, associated to an operating motor reducer device with alternate movement between the blades, which causes a maximum whirlwind effect as regards knocking down the fruit, a motor (40) and an adjustable pressure air generator turbine (41) for knocking down the fruit and, where applicable, for applying a phyto-sanitary product
- a dose-regulating tank (42) for the phyto-sanitary product in a dry or humid powder state that injects liquid to the air outlet
- a mixed air generator (48) to form a thrust barrier with air outlet through its projector (118) to operate as a barrier and/or pressure of the phyto-sanitary product supplied by the tank (50)
- an air generator (32) specifically for the set of blowing devices and air barrier with outlet through its projector (117) and phyto-sanitary spray
- an electric generator (47) for supplying the devices and electric motors and installation of lighting for working at night with the equipment

4. Integrated versatile equipment for harvesting and treatment of fruit on trees, according to claim 1, **characterized by** the fact a simplified version of the equipment to operate on difficult terrain includes a support (81) suspended on the tractor arms with a height-adjustable rotating plate (82), slope compensator for fast hook-up to the jeep and a height-adjustable vertical guided support (83) with an adjustable wheel device and, where applicable, two wheels, slope compensator, as well as a cylinder (86) for leveling the wheel axle on sloping terrain.

5. Integrated versatile equipment for harvesting and treatment of fruit on trees, according to claim 1, **characterized by** the fact the transport means of the knocked down fruit on collecting trays (5) as regards their transmission outside the equipment and loading on transport trailers includes:
a first horizontal conveyor belt (13),
a second back conveyor belt (36) which is slanting and ascending,
a first air current generator (53) for separating the leaves harvested with the fruit,
a third laterally ascending conveyor belt (54) at the bottom of which is a second turbine (65) that also separates the leaves,
a flow-regulating hopper (66) of the harvested fruit as regards its uniform delivery to the loading belts (59) on trailers (60 and 61) and toboggans (59) for protecting the fruit against blows when falling.

6. Integrated versatile equipment for harvesting and treatment of fruit on trees, according to claim 1, **characterized by** the fact the two vehicles (2) supporting the operative structure of the equipment operate based on collecting the knocked down fruit and, where applicable, collecting the surplus phyto-sanitary product used for treating the trees and the fruit, whilst at least one of the two vehicles carries out the functions of knocking down the ripe fruit or treatment with phyto-sanitary products.

7. Integrated versatile equipment for harvesting and treatment fruit on trees, according to claim 1, **characterized by** the fact direct delivery of delicate fruit, such as the olive harvest, to containers-vats placed on the trailers and with liquid solutions is verified, in order to prevent defects caused by blows during knocking down and in view of their fast transportation to manufacturing centers.
